# EUROPEAN PATENT APPLICATION

(11) **EP 2 060 389 A1**
(43) Date of publication of application: **20.05.2009**
(21) Application number: 07120649.4
(22) Date of filing: 14.11.2007
(51) Int. Cl.: B32B 13/02

(54) **Laminate panels for flooring, wall and ceiling systems**

(71) Applicant: Van Cauwenberge NV, 9620 Zottegem (BE)
(72) Inventor: Van Cauwenberge, Thomas, 9620 Zottegem (BE)
(74) Representative: Brants, Johan P.E.

(57) **Abstract**

The present invention relates to a laminate panel for flooring, wall or ceiling systems comprising a fire-proof core layer comprising magnesium oxide disposed between a surface layer such as a decorative layer at the upper side of said core layer and a backing layer at the underside of said core layer, at least one pair of opposing edges of the core layer being profiled to represent a groove and tongue, the tongue having a configuration corresponding to the groove so that several panels can be mutually interlocked in the vertical or horizontal direction in relation to one another, wherein said groove and tongue are made in one piece with the core layer, characterized in that said core layer comprises a composition derived from a colloidal mixture of magnesium oxide, magnesium chloride and water. The present invention further relates to the use of the laminate panels according to the invention.

## Description

### Technical Field

The present invention generally relates to the field of flooring, wall or ceiling systems comprising laminated panels. In particular, the invention relates to an improved laminate panel for flooring, wall and ceiling systems wherein the core layer is comprised of fireproof material.

### Background

The present invention is particularly suitable for use in laminate panel systems wherein the panels may be locked and unlocked by mechanical means. Continuous technical efforts in the art have resulted in the development of many types of laminate panels suitable for use in a wide range of applications. The laminate panels according to the present invention belong to the type of fireproof laminate panels that may be employed in the manufacture or building of spacing doors, wall covering, ceilings etc.. US 2006/0090414 in this respect discloses a fireproof wood board composed of a fireproof liner plate below a surface plate, and a substrate below the fireproof liner plate. The fireproof liner plate may be made of calcium silicic acid plate, magnesium oxide plate, cement plate or gypsum plate.

It is the aim of the present invention to provide an improved fireproof laminate panel comprising a particular magnesium oxide board showing physical parameters far superior when compared to the characteristics of the fireproof material used in the art.

### Summary of the Invention

The present invention relates to improved fireproof laminate panels. The laminate panels of the present invention comprise a core layer of fireproof material having particular advantageous properties. In particular, the present invention provides a laminate panel for flooring system comprising a fire-proof core layer comprising magnesium oxide disposed between a surface layer such as a decorative layer at the upper side of said core layer and a backing layer at the underside of said core layer, at least one pair of opposing edges of the core layer being profiled to represent a groove and tongue, the tongue having a configuration corresponding to the groove so that several panels can be mutually interlocked in the vertical or horizontal direction in relation to one another, wherein said groove and tongue are made in one piece with the core layer, characterized in that said core layer comprises a composition of magnesium oxide, magnesium chloride and water.

The laminate panels according to the present invention provide the advantages of being waterproof, fireproof, highly impact resistant, sound insulative, light weighted, easy to process and environment-friendly.

### Figures

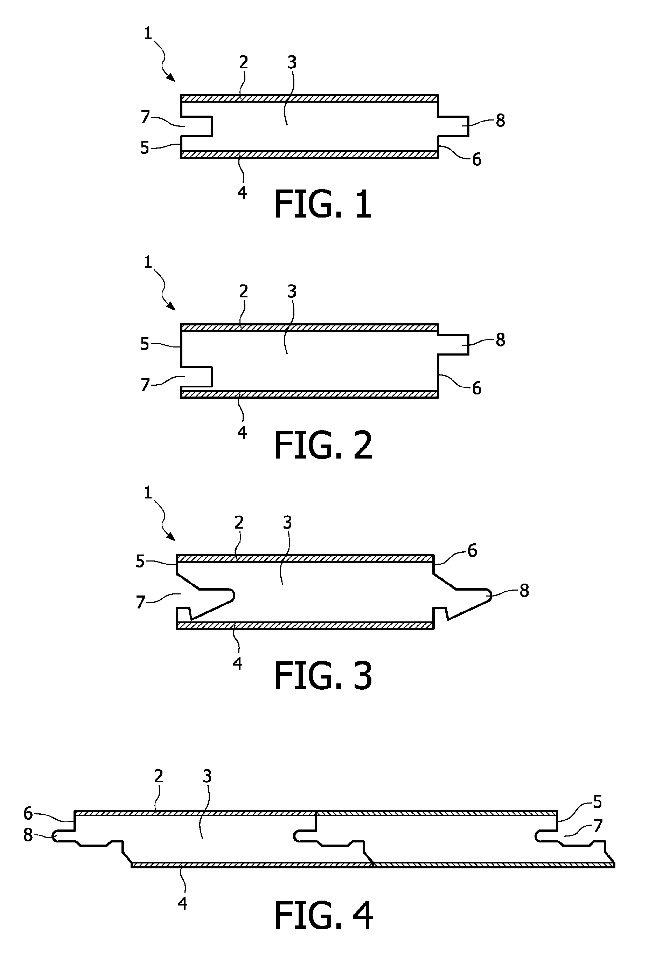

**Figure 1** shows one embodiment of a laminate panel (1) according to the present invention comprising a surface layer (2), a core layer (3) and a backing layer (4). The core layer (3) is provided at the opposing edges (5) and (6) with a groove (7) and a tongue (8). In a particular embodiment, groove and tongue are centrally positioned along the corresponding opposing edges.
**Figure 2** shows another particular embodiment wherein the said groove (7) and tongue (8) are asymmetrically positioned along the corresponding opposing edges (5) and (6). The tongue and groove may have a simple configuration such as shown in Figures 1 and 2 or may have a more complex configuration of the type "click" panel as shown in **Figure 3****.**
**Figure 4** shows one embodiment of the present invention wherein several panels can be mutually interlocked in the vertical direction in relation to one another.

### Detailed description

The present invention relates to fireproof laminate panels having physical parameters superior to the characteristics of fireproof panels known in the art. The present invention will now be explained with reference to Figures 1 to 4.

A laminate panel (1) according to the present invention generally comprises a surface layer (2) placed on top of a core layer (3). A backing layer (4) may be placed at the bottom side of the core layer. The present invention also contemplates laminate panels comprising only a surface and a core layer.

The surface layer is usually a decorative layer adhered on top of the core layer giving the panel a desired look. This decorative layer may be a decor paper in the form of a web or a sheet imprinted with a high-resolution photo-reproduction of e.g., wood grain, natural stone or laminate tile pattern. Such paper is usually placed on the core layer and bonded thereto by pressing under elevated pressure. The surface layer likewise may be a foil made out of e.g. decorative plastic, PVC foil etc.. The surface layer may also be a layer of cork, linoleum, thermoplastic material, rubber, veneer or similar. The surface layer additionally may be impregnated with a fire retardant such as melamine. Alternatively, the core layer may be provided with a surface layer through spraying with e.g. paint or lacquer. The surface layer may be further treated with one or more layers varnish such as commercially available.

Accordingly, in one embodiment, a laminate panel according to the present invention is provided, wherein the surface layer is chosen from the group comprising thermoplastic material, waterproof material, melamine impregnated material, wood, veneer, plastic foil, paper, or any mixture thereof.

Surface treatments as described above provide the advantage that laminate panels according to the present invention are suitable for use in e.g., humid environments such as bathrooms, showers, sanitary rooms etc.. A particular suitable surface treatment in this respect is melamine impregnation of the surface layer. Such surface layer may be of identical material as the core layer such as magnesium oxide board; i.e. fireproof material comprising a composition derived from a colloidal mixture of magnesium oxide, magnesium chloride and water. Typically, such magnesium oxide board is has a water content of between 10% and 20 %, usually about 14%. In order for the melamine impregnation to be effectively performed, the magnesium oxide board is preferably dried prior to performing the melamine impregnation to lower its water content to between 5% and 9%, preferably to a water content of 7% to 8 %. Such drying of magnesium oxide board material may be done in a conventional drying oven at a temperature of between 95°C to 105°C as known by a person skilled in the art.

Accordingly, in another embodiment of the present invention, a laminate panel according to the present invention is provided, wherein the surface layer is melamine impregnated material, in particular melamine impregnated magnesium board.

The bottom layer, or backing, lends dimensional stability to the panels. Materials suitable to function as backing are various wood and wood veneer materials comprising hard wood, teak wood, bamboo, polywood etc. Non-woody materials include laminate, plastic, paper, aluminum foil or like materials. Like the surface layer, also the backing layer may be impregnated with e.g., melamine such that it helps guard against moisture from the sub-surface, i.e., wall, floor, ceiling etc..

The laminate panels according to the present invention are particularly provided with a fireproof core layer. The main component of this core layer is magnesium oxide. More particularly, the core layer comprises a composition derived from a colloidal mixture of magnesium oxide, magnesium chloride and water.

The expression "colloidal mixture of magnesium oxide, magnesium chloride and water" refers to a stable colloidal combined system of MgO, MgCl₂ and H₂O alkali agent.

Colloidal processing methods for consolidation of MgO/MgCl₂ suspensions in water are known in the art.

In accordance, the present invention provides a laminate panel (1) for flooring, wall and ceiling systems comprising a fireproof core layer (3) comprising magnesium oxide disposed between a surface layer (2) such as a decorative layer at the upper side of said core layer and a backing layer (4) at the underside of said core layer, at least one pair of opposing edges (5, 6) of the core layer being profiled to represent a groove (7) and tongue (8), the tongue having a configuration corresponding to the groove so that several panels can be mutually interlocked in the vertical or horizontal direction in relation to one another, wherein said groove (7) and tongue (8) are made in one piece with the core layer (3), characterized in that said core layer (3) comprises a composition derived from a colloidal mixture of magnesium oxide, magnesium chloride and water.

The magnesium oxide part within the composition derived from said colloidal mixture of magnesium oxide, magnesium chloride and water is comprised between 60 w/v and 95 w/v. More in particular, the magnesium oxide part within the composition derived from said colloidal mixture of magnesium oxide, magnesium chloride and water is comprised between 75 w/v and 90 w/v. A particularly suitable percentage of magnesium oxide within the composition derived from said colloidal mixture of magnesium oxide, magnesium chloride and water is 85 w/v. This w/v value characterizes the type colloidal mixture of magnesium oxide that is used within the core layer composition. In the present invention, the core layer comprises magnesium oxide colloidal mixture of the type 85 w/v.

In accordance, within an embodiment of the present invention, a laminate panel (1) is provided having a core layer (3) comprising a composition derived from a colloidal mixture of magnesium oxide, magnesium chloride and water, wherein the magnesium oxide percentage within the composition derived from a colloidal mixture of magnesium oxide, magnesium chloride and water is between 60 w/v and 95 w/v.

Within a further embodiment of the present invention, a laminate panel (1) is provided having a core layer (3) comprising a composition derived from a colloidal mixture of magnesium oxide, magnesium chloride and water, wherein the magnesium oxide percentage within the composition derived from a colloidal mixture of magnesium oxide, magnesium chloride and water is 85 w/v.

The content of the said magnesium oxide within the core layer in a panel according to the present invention is comprised between 20% and 70 %, more in particular between 25 % and 50 %. A particular suitable percentage of magnesium oxide within a panel according to the present invention is 40 %.

In a further embodiment of the present invention, the core layer (3) comprising a composition derived from a colloidal system of magnesium oxide, magnesium chloride and water may further comprise a strengthening material to improve durability, mechanical strength and rigidity.

Accordingly, within an embodiment of the present invention, a laminate panel (1) as described herein is provided wherein the composition derived from said colloidal mixture of magnesium oxide, magnesium chloride and water is reinforced with a strengthening material.

A particular suitable reinforcement for strengthening the core layer (3) may be fibreglass fibres in any suitable arrangement, ordered or not.

Accordingly, in a further embodiment, a laminate panel (1) according to the present invention is provided wherein said strengthening material if fibreglass.

Particularly suitable is the use of alkali resistant fibre glass mesh.

To the core layer material comprising a composition derived from a colloidal mixture of magnesium oxide, magnesium chloride and water and reinforced with a strengthening material, may be added a light material as filler.

Table 1 shows a typical composition of core layer material used within the present invention.

**Table 1: non-limitative example of a typical core layer composition**

| **Material** | **Type** | **Content** |
|---|---|---|
| Fibre glass mesh | 01 | 3% |
| Magnesium oxide | 85% | 40% |
| Magnesium chloride | 46% | 30% |
| B1 agent (binder) | calcium phosphate | 0.5% |
| B2 agent (binder) | bitter salt | 0.5% |
| Filler | 24 mesh | 12% |
| Water | | 14% |

A typical core layer material may thus be a magnesium oxide board comprising magnesia material as its main material, comprising alkali-resistant fibreglass mesh as strengthening material and comprising light material as filler. The composition of core layer material used within the present invention may additionally comprise binder agents in minimal amounts acting as promoters in the processing of the core layer material. These binder agents typically accelerate the processing leading to an improvement of the physical characteristics of the laminate panel(s) such as waterproof characteristics and moisture resistance.

In accordance, due to the characteristic core layer, the laminate panels according to the present invention show excellent waterproof characteristics with a rate of water absorption of the core layer of between 10% and 25%, preferably between 15 and 20 %, more preferably of 18%.

The water content within core layer is typically between 9% and 22%. A more suitable water content is comprised between 10% and 17%, including 11%, 12%, 13%, 14%, 15% and 16%. A particular suitable water content within the core layer is 14%.

Regarding fireproof characteristics, the core layer material does not burn at temperatures up to 800°C and does not suffer, in contrast to materials such as gypsum board and calcium silicate board, from breaking due to dehydration. The core layer used within the present invention typically belongs to class 1 fire prevention and stop burning materials.

Additionally, due to the characteristics of the core layer, the laminate panels according to the present invention show a high impact resistance comprised between 2.5 KJ/m² and 8.5 KJ/m². More particularly, the laminate panels according to the present invention show an impact resistance comprised between 3.6 KJ/m² and 7.5 KJ/m², including 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4 and 7.5 KJ/m². Most particularly, the laminate panels according to the present invention show an impact resistance of 6.8 KJ/m².

Furthermore, the material used for the core layer of a laminate panel according to the present invention shows stable performance due to the absence of hygroscopic behaviour, it shows no deformation and shows a good tenacity.

Magnesium oxide comprising core material suitable in the manufacture of laminate panels according to the invention is easy to process. This is due to the bending strength which is typically comprised between 15 MPa and 30 MPa. More particularly, the bending strength, of the core material is comprised between 18 MPa and 25 MPa, including 18, 19, 20, 21, 22, 23, 24 and 15 MPA. Most particularly, the bending strength, of the core material is 21 MPa.

Tensile strength of the magnesium oxide based core layer material is comprised between 5.0 MPa and 15.0 MPa. A particular suitable strength of the magnesium oxide based core layer material is comprised between 8.0 MPa and 11.0 MPa, including 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9 and 11.0 MPa.

A core layer comprised within the laminate panels according to the present invention showing physical parameters as described herein may be magnesium oxide board.

Accordingly, in a further embodiment, a laminate panel according to the present invention is provided, wherein said core layer is made out of magnesium oxide board.

However, magnesium oxide based material showing similar characteristics would be equally suitable.

The laminate panels according to the present invention provide the advantages of being waterproof, fireproof, highly impact resistant, sound insulative, light weighted, easy to process and environment-friendly.

Due to its characteristics, the core layer of the panels according to the invention has extraordinary fireproof and moisture resistant abilities. It is furthermore innoxiousness and flavourless, incorruptibleness and insect resistant. This light weighted core material is furthermore environmental-friendly.

Table 2 shows a summary of the characteristics of the core material of a panel according to the present invention. It shows that the laminate panel according to the present invention comprising a new and inventive magnesium oxide board shows physical parameters far superior when compared to the characteristics of the fireproof material used in the art.

Laminate panels according to the present invention are generally rectangular and elongated but may also have alternative configurations. At least two opposite edges (5, 6) of the core layer (3) are provided with a profile allowing multiple laminate panels according to the invention to be interlocked when placed side-by-side in a same plane in horizontal direction as shown in Figure 4. In the alternative, all edges may be pair wise and oppositely provided with tongue and groove such that multiple panels may be assembled by interlocking to one another in a same plane in a horizontal as well as vertical direction, i.e., side-by-side and end-to-end. As such a two-dimensional surface may be covered with a panel system according to the invention. By "interlocking" is meant a co-acting connection which connect the panels of the present invention vertically and/or horizontally.

Laminate panels according to the invention may be assembled and disassembled reliably and form-fittingly due to the configuration of the groove corresponding to the configuration of the tongue. Configurations of tongues and grooves may be of simplistic design as shown in Figures 1 and 2 or may have more complex designs such as shown in Figures 3 and 4. In general, laminate panels according to the present invention may be combined with all types of known locking systems. Within the present invention, groove and tongue are made in one piece with the core layer. Hereto, groove and tongue may be typically machined-out of the core layer prior to assembling the laminate panel. For example, a milling-machine may be used for milling a core plate in the desired shape.

**Table 2: material characteristics of suitable core material of the present invention compared to known fireproof material**

| **Items** | **Core layer suitable for use in present invention** | **Gypsum board** | **Calcium silicate board** | **Cement board** |
|---|---|---|---|---|
| | **6 mm** | **9.5 mm** | **6mm** | **6mm** |
| Density (g/cm³) | 0.9 to 1.4 | 1.0 | 1.3 | 0.6 to 1.9 |
| Flammability | does not burn or show any change at 800°C; remains flameless at 1200°C | does not burn at 800°C but may break into pieces because of dehydration | tends to break apart at 800°C | does not burn |
| Average bending strength (Mpa) | 10 to 20; more suitably 13 to 18; most suitably 16 | breaking load: 140 -360 N | ≥ 4 to 9 | ≥ 7 to 13.0 |
| Impact strength (KJ/m²) | 2.5 to 8.5; more suitably 3.6 to 7.5 including the outer limits, most suitably 6.8 | low | high | ≥ 1.9 to 3 |
| Water absorption % | 10 to 25, more suitably 15 to 20; most suitably 18 | ≤ 10 | ≤ 10 | ≤ 20 to 32 |
| Bending strength when wet (Mpa) | no change | decline | decline | no change |
| Moisture resistance | good | bad | good | good |
| Freeze resistance | shows no damage after 25 cycles of freeze thawing | --- | --- | shows no damage after 25 cycles of freeze thawing |
| Poisonous materials | none | none | part of products contain harmful substances such as asbestos | part of products contain harmful substances such as asbestos |
| Decorative suitability | may be covered with faces of any kind or sprayed with paint or lacquer | in most cases paint may be used and no face is stuck to it | in most cases paint may be used and no face is stuck to it | in most cases paint may be used and no face is stuck to it |
| Cutability | may be cut with a paper knife or a toothless saw | may be cut with a paper knife | can only be cut with a toothless saw | can only be cut with a toothless saw |
| Visible bending strength | may be bent within certain limits, possessing certain tenacy and rigidity | hard to bend | possesses rigidity, hard to bend | hard to bend |
| Finished cost | moderate material cost and moderate finished cost | low material cost and moderate finished cost | high material cost and high finished cost | higher material cost and a higher finished cost |

Accordingly, in one embodiment, a laminate panel according to the invention is provided, wherein the edges of the core layer are profiled on both the longitudinal and transversal sides so that several panels can be mutually interlocked in both the vertical and horizontal direction in relation to one another.

In a further embodiment, a laminate panel according to the present invention is provided, wherein said groove and tongue is machined out of the core layer.

When assembling multiple panels mutually to one another, it may be at the option of the user to install the assembly with or without mastic or adhesive coating on a floor base. For application onto a wall base or a ceiling base, it may, however be desirable to use an adhesive coating. Typically, laminate panels according to the present invention may be glued onto a preferred base using materials and methods known in the art. Alternatively, the laminate panels according to the present invention may also be nailed onto a base.

Laminate panels according to the present invention generally comprise a surface layer of 0.2 to 0.8 mm, a core layer of 6.0 to 12.0 mm and a backing layer of 0.1 to 0.6 mm thickness. The assembly of surface layer, core layer and backing layer may be according to methods known in the art. The layers may be assembled according to an off-set arrangement. In general, laminate panels according to the present invention are assembled such that all layers have a common periphery as shown in the figures. The final arrangement may be determent by the configuration of groove and tongue.

According to a further embodiment, a laminate panel according to the present invention is provided, wherein the surface layer, core layer and backing layer are laminated co-extensively such that all layers have a common periphery.

Provided with a surface layer of melamine impregnated material, varnished material, plastic foil or veneer the laminate panels according to the invention are suitable for use in a variety of applications. Laminate panels with waterproof surface layer are particularly suitable for use in humid environments such as bathrooms, showers and sanitary rooms. The fireproof core layer of the laminate panels according to the present invention makes them particularly suitable for applications requiring fire resistance such as fire resistant doors, walls and ceilings in a variety of buildings such as office buildings, schools and public buildings. Laminate panels according to the present invention may equally be used as base boards.

Accordingly, it is an object of the present invention to provide for the use of a laminate panel as described herein as floor panel, base board, wall panel or ceiling panel.

It is a further object of the present invention to provide for the use of a laminate panel as described herein in the manufacture of fire-proof surfaces chosen from the group comprising walls, ceilings, floors and doors.

Various dimensions of the panels according to the present invention may be manufactured in view of particular customer requirements. Table 3 provides a non-limiting representation of possible application of the panels according to the present invention in relation to panel thickness.

**Table 3: non-exhaustive and non-limiting examples of application ranges of the panels of the present invention.**

| | Thickness (mm) | | | | | | |
|---|---|---|---|---|---|---|---|
| | 3 | 5 | 6 | 8 | 9 | 10 | 12 |
| Ceiling | | | ● | ● | ● | ● | ● |
| Partitions | | | ● | ● | ● | ● | ● |
| Outside wall | | | ● | ● | ● | ● | ● |
| Surface | | | ● | ● | ● | ● | ● |
| Fireproof door | | ● | ● | | | | |
| Roof lining board | ● | | | | | | |

Panels may be manufactured in a wide range of sizes such as 900x1800 mm, 900x2400 mm, 900x2700 mm, 1220x2440 mm, 1220x2700 mm and 1220 x 1800 mm. These examples are to be taken as informative and are in no way limitative.

## Claims

1. Laminate panel for flooring, wall and ceiling systems comprising a fire-proof core layer comprising magnesium oxide disposed between a surface layer such as a decorative layer at the upper side of said core layer and a backing layer at the underside of said core layer, at least one pair of opposing edges of the core layer being profiled to represent a groove and tongue, the tongue having a configuration corresponding to the groove so that several panels can be mutually interlocked in the vertical or horizontal direction in relation to one another, wherein said groove and tongue are made in one piece with the core layer, **characterized in that** said core layer comprises a composition derived from a colloidal mixture of magnesium oxide, magnesium chloride and water.

2. A laminate panel according to claim 1, wherein the magnesium oxide percentage within the composition derived from a colloidal mixture of magnesium oxide, magnesium chloride and water is between 60 w/v and 95 w/v.

3. A laminate panel according to claim 2, wherein the magnesium oxide percentage within the composition derived from a colloidal mixture of magnesium oxide, magnesium chloride and water is 85 w/v.

4. A laminate panel according to any of Claims 1 to 3, wherein the edges of the core layer are profiled on both the longitudinal and transversal sides so that several panels can be mutually interlocked in both the vertical and horizontal direction in relation to one another.

5. A laminate panel according to any of Claims 1 to 4, wherein said groove and tongue is machined out of the core layer.

6. A laminate panel according to any of Claims 1 to 5, wherein said colloid of magnesium oxide, magnesium chloride and water is reinforced with a strengthening material.

7. A laminate panel according to Claim 6, wherein said strengthening material if fibreglass.

8. A laminate panel according to any of Claims 1 to 7, wherein said core layer is made out of magnesium oxide board.

9. A laminate panel according to any of Claims 1 to 8, wherein the surface layer, core layer and backing layer are laminated co-extensively such that all layers have a common periphery.

10. A laminate panel according to any of Claims 1 to 9, wherein the surface layer is chosen from the group comprising thermoplastic material, waterproof material, melamine impregnated material, wood, veneer, plastic foil, paper, or any mixture thereof.

11. Use of a laminate panel according to any of Claims 1 to 10 as floor panel, base board, wall panel or ceiling panel.

12. Use of a laminate panel according to any of Claims 1 to 10 in the manufacture of fire-proof surfaces chosen from the group comprising walls, ceilings, floors and doors.
